# EUROPÄISCHE PATENTSCHRIFT

(11) **EP 2 275 218 B1**
(45) Veröffentlichungstag und Bekanntmachung des Hinweises auf die Patenterteilung: **20.07.2016**
(21) Anmeldenummer: 10154190.2
(22) Anmeldetag: 22.02.2010
(51) Int. Cl.: B23C 3/18, B23C 3/30, B23C 3/34, B23P 15/00

(54) **Verfahren zum Bearbeiten des Rotors einer Turbine sowie Vorrichtung zur Durchführung des Verfahrens**
Method for processing the rotor of a turbine and device for implementing the method
Procédé de traitement du rotor d'une turbine ainsi que dispositif d'exécution du procédé

(30) Priorität: 14.07.2009 DE 102009033234
(43) Veröffentlichungstag der Anmeldung: 19.01.2011
(73) Patentinhaber: ALSTOM Technology Ltd, 5400 Baden (CH)
(72) Erfinder: Storch, Wilfried, D-13158, Berlin (DE); Fiedler, Stefan, D-10115, Berlin (DE); Heucke, Bjoern, D-10437, Berlin (DE); Schwaar, Michael, D-09232, Hartmannsdorf (DE); Jaehnert, Thomas, 09232 Hartmannsdorf b. Chemnitz (DE); Gnirss, Günter, D-69469, Weinheim (DE)
(74) Vertreter: General Electric Technology GmbH

(56) Entgegenhaltungen:
- EP-A1- 1 500 453
- WO-A1-03/064089
- WO-A1-2007/118771
- DE-A1- 19 806 608

## Beschreibung

### TECHNISCHES GEBIET

Die vorliegende Erfindung bezieht sich auf das Gebiet der Technik von Turbinen. Sie betrifft ein Verfahren zum Bearbeiten von zur Aufnahme von Schaufeln vorgesehenen Nuten, insbesondere Tannenbaumnuten, an einem Rotor einer Turbine gemäss dem Oberbegriff des Anspruchs 1.

### STAND DER TECHNIK

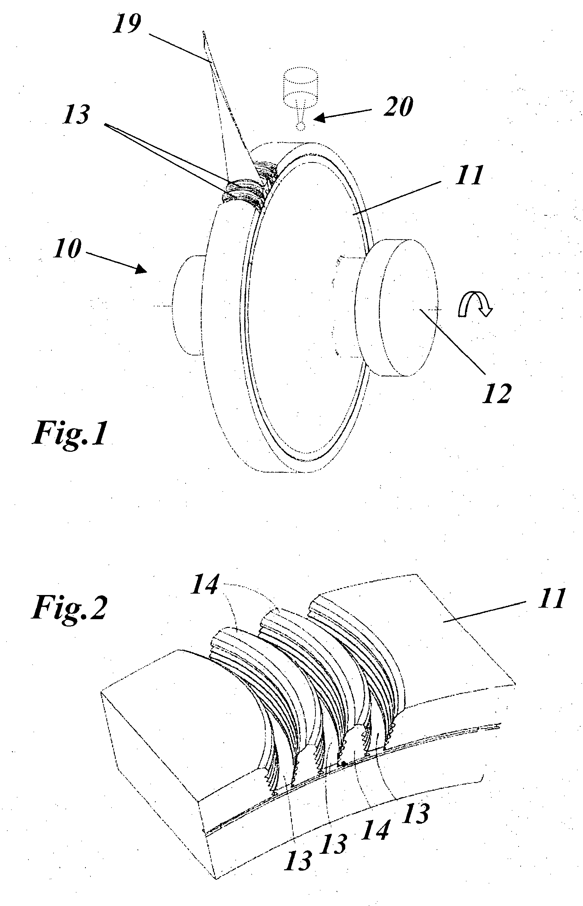

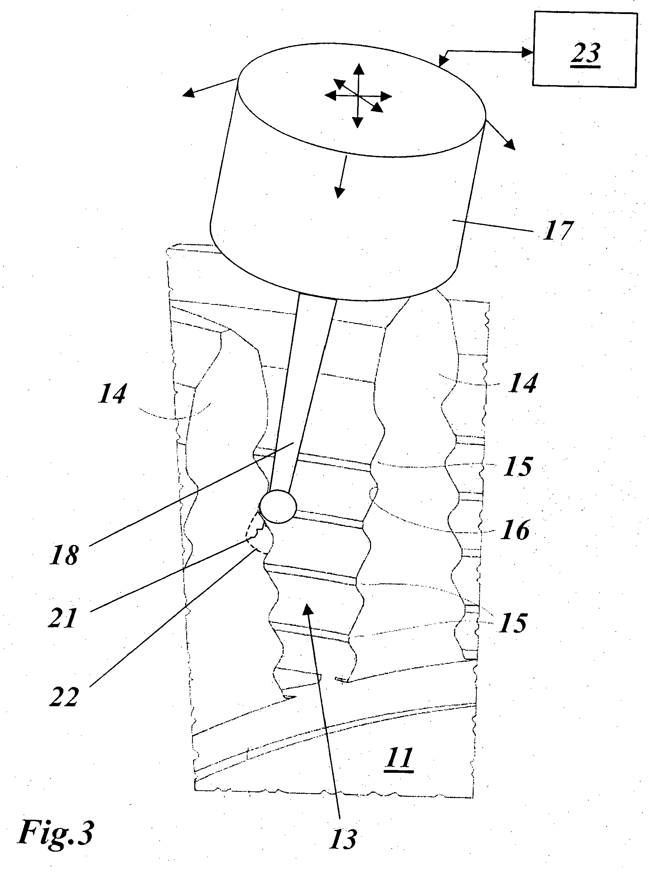

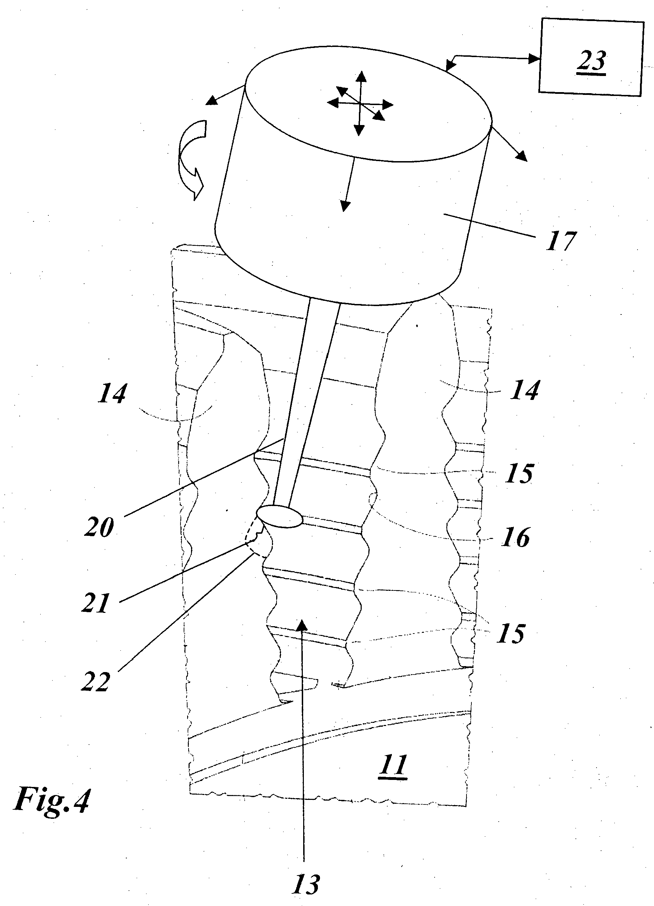

Die Befestigung der am Läufer bzw. Rotor einer Niederdruck-Dampfturbine eingesetzten Endschaufeln mit Tannenbaumfüssen ist hoch belastet. In Fig. 1 ist ein Beispiel für den Rotor 10 einer Niederdruck-Dampfturbine mit einer beispielhaften Laufschäufel 19 wiedergegeben. Die Laufschaufel 19 ist in eine der in axialer Richtung (Achse 12) verlaufenden, gekrümmten Tannenbaumnuten 13 in der Rotorscheibe 11 eingeschoben. Die gebogenen Tannenbaumnuten 13 mit den dazwischen angeordneten Zähnen 14 sind in Fig. 2 vergrössert wiedergegeben. An ihren Flanken weisen die Tannenbaumnuten 13 übereinander angeordnete Zacken (15 in Fig. 3 und 4) auf, zwischen denen jeweils ein Zackengrund (16 in Fig. 3 und 4) liegt. In der Druckschrift DE-A1-10 2007 055 842 ist - ebenso wie in der WO-A1-01/96055 - beispielsweise ein Verfahren zum Herstellen derartiger Tannenbaumnuten offenbart. Ein Verfahren gemäß dem Oberbegriff des Anspruchs 1 ist aus EP 1 500 453 A1 bekannt.

Abhängig von der Turbinenfahrweise kann es zu Rissen in den Tannenbaumnuten 13 kommen. Insbesondere in Tannenbaumnuten der letzten und vorletzten Laufreihe an Niederdruckturbinenläufern von im Markt befindlichen Turbinentypen sind die genannten Rissschädigungen bekannt und bei dem derzeitigen Design der Nuten nicht vermeidbar. Die Anrisse wachsen nach der Inkubationsphase weiter und führen nach Erreichen einer bestimmten Risstiefe zum instabilen Risswachstum mit höchstmöglichem Funktionsrisiko für die Betriebssicherheit der Läufer. Deshalb sind Anrisse in Tannenbaumnuten von Turbinenwellen nicht hinnehmbar.

Die derzeitige Prävention gegenüber dem Bauteilversagen besteht in der zyklischen Bauteilinspektion. Dabei festgestellte überkritische Risstiefen werden ausgefräst, um die erhöhten Spannungen in den Rissspitzen mit Wachstumspotenzial aufzulösen. Das Ausfräsen erfolgt z.T. manuell mit erheblichem Zeitaufwand und qualitativer Unsicherheit und ausschliesslich in gebogenen Tannenbaumnuten mit einer an eine Führungsbahn der Nutbiegung gebundene Fräsmaschine geringer Abtragsleistung. Insbesondere wird dazu eine Arbeitsbühne oder Gerätebühne um und/oder das Bauteil überbrückend eingesetzt, was einen hohen Geräte- und Montageaufwand zur Ausführung des Verfahrens erfordert.

### DARSTELLUNG DER ERFINDUNG

Es ist daher Aufgabe der Erfindung, den Nutgrund und die Nutflanken insbesondere von Tannenbaumnuten mittels hochproduktiver und ohne auf die Nutbahn eingeschränkte Gerätetechnik rissfrei zu machen bzw. rissfrei zu halten. Insbesondere soll ein Nutgrund erzeugt werden, der frei von Rissen ist und dazu eine Verfahrenstechnik genutzt werden, die ohne Einschränkung durch die Nutkontur und Nutbahn anrissgefährdeter Tannenbaumnuten wirksam wird, ohne die Nutkontur in ihrer designgemässen Auslegung zu andern oder zu erneuern.

Die Aufgabe wird durch die Gesamtheit der Merkmale des Anspruchs 1 gelöst. In den Nuten bzw. Tannenbaumnuten wird mittels einer programmgesteuerten Fräsvorrichtung Material abgetragen w, wobei die Fräsvorrichtung mit einem Fräswerkzeug in die Nut bzw. Tannenbaumnut eintaucht, welches von einem im Raum frei beweglichen Fräswerkzeugpositioniergerät an den zu bearbeitenden Stellen in der Nut bzw. Tannenbaumnut entlang geführt wird.

Wesentlich für die Erfindung ist, dass zunächst die Nuten bzw. Tannenbaumnuten auf das Vorhandensein von Rissen untersucht werden, dass d,ie mit Rissen behafteten Nuten bzw. Tannenbaumnuten mit einem Tastkopf abgefahren werden, dass jeweils ein auf die Rissform abgestimmtes Fräswerkzeug ausgewählt wird, dass die Tiefe des zur Entfernung des Risses auszuarbeitenden Gebietes bestimmt wird, und dass das den Riss enthaltende Gebiet nach Massgabe der abgetasteten Nutkontur bis zur vorbestimmten Tiefe mit dem ausgewählten Fräswerkzeug abgetragen wird.

Vorzugsweise wird zum Abfahren der mit Rissen behafteten Nuten bzw. Tannenbaumnuten der Tastkopf mittels des Fräswerkzeugpositioniergeräts verfahren.

Eine andere Ausgestaltung der Erfindung zeichnet sich dadurch aus, dass das Fräswerkzeug entlang einer Nutbahnkontur durchgeführt wird, ohne die Form der Nut bzw. Tannenbaumnut insgesamt zu ändern.

Eine weitere Ausgestaltung der Erfindung ist dadurch gekennzeichnet, dass das Fräswerkzeug durch eine ausserhalb der Nut bzw. Tannenbaumnut angeordnete Antriebseinheit angetrieben und/oder bewegt wird.

Weiterhin kann es vorteilhaft sein, wenn zur Ausarbeitung des den Riss enthaltenden Gebietes nacheinander mehrere Fräswerkzeuge mit unterschiedlichen Schneidkörpern und/oder Werkzeugformen verwendet werden.

Ebenso ist es denkbar, dass das Fräswerkzeug in der Nut bzw. Tannenbaumnut in mehreren Ebenen programmiert steuerbar bewegt wird.

Eine andere Ausgestaltung des Verfahrens nach der Erfindung ist dadurch gekennzeichnet, dass der Rotor auf Lagermitteln aufliegend gelagert wird, und dass die Fräsvorrichtung mit einem Fräswerkzeug die Nut bzw. Tannenbaumnut von unten oder von der Seite bearbeitet, wobei die Bearbeitungskräfte aus dem Fräsvorgang ohne zusätzliche Bauteilarretierung von der Masse des Rotors aufgenommen werden. Hierdurch kann der gerätetechnische und den Reparaturprozess beeinflussende Aufwand minimiert werden, so dass der Reparaturprozess bedarfsweise am Einsatzort der Turbine selbst durchgeführt werden kann.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: ein Beispiel für den Rotor einer Niederdruck-Dampfturbine mit einer Laufschaufel, die in ein der in axialer Richtung verlaufenden, gekrümmten Tannenbaumnuten in der Rotorscheibe eingeschoben ist;
- Fig. 2: in einer vergrösserten Ansicht mehrere der über den Umfang der Rotorscheibe gleichmässig verteilten Tannenbaumnuten aus Fig. 1;
- Fig. 3: in einer schematischen Darstellung das Abfahren einer mit einem Riss behafteten Tannenbaumnut mit einem von einem allseits beweglichen Fräswerkzeugpositioniergerät geführten Tastkopf gemäss einem Ausführungsbeispiel der Erfindung;
- Fig. 4: in einer zu Fig. 3 vergleichbaren schematischen Darstellung das Ausfräsen des den Riss enthaltenden Gebietes entlang der zuvor abgetasteten Nutkontur; und
- Fig. 5: in einer stark schematisierten Darstellung eine Vorrichtung zur Bearbeitung der rissbehafteten Nuten von unten oder von der Seite gemäss einem Ausführungsbeispiel der Erfindung.

### WEGE ZUR AUSFÜHRUNG DER ERFINDUNG

Mit der vorliegenden Erfindung ist es möglich, einen Nutgrund zu erzeugen, der frei von Rissen ist, wobei eine Verfahrenstechnik genutzt wird, die ohne Einschränkung durch die Nutkontur und Nutbahn anrissgefährdeten Tannenbaumnuten einsetzbar ist, ohne die Nutkontur in ihrer designgemässen Auslegung zu ändern oder zu erneuern.

Die erfindungsgemässe Lösung wird bestimmt durch einen Fräsvorgang mittels eines auf die Nutrissform masslich abgestimmten Fräswerkzeuges, das von einer räumlich in bis zu fünf Achsen steuerbaren Werkzeugführung (Fräswerkzeugpositioniergerät 17 in Fig. 3 und 4) entlang der Risskontur geführt wird und dessen Tiefenzustellung beim Fräsprozess auf die Risstiefe abgestimmt ist und die möglichen Risse in Tannenbaumnuten entfernt.

Der rissfreie neue Nutgrund wird bestimmt, indem zunächst der aktuelle Schadenszustand ermittelt wird, d.h. vorhandene Risse identifiziert werden. Auf Art und Form der Risse abgestimmt wird dann die Fräswerkzeugkontur. Gemäss Fig. 3 erfolgt mittels eines Tastkopfes 18 ein Abfahren der mit einem Riss 21 behafteten Nutkontur mit einem mehrachsig steuerbaren Fräswerkzeugpositioniergerät 17, das sowohl in den drei Raumrichtungen verfahren als auch in verschiedene Richtungen verschwenkt werden kann (Pfeile in Fig. 3) und mit einer Steuerung 23 in Verbindung steht, welche die Bewegung steuert und die abgetastete Nutkontur abspeichert. Die durch den Tastkopf 18 aufgenommene Nutkontur wird ergänzt durch eine Tiefe, bis zu der das Material im Bereich des Risses 21 abgetragen werden muss, um den Riss 21 sicher zu entfernen (gestrichelter Ausarbeitungsbereich 22 in Fig. 3 und 4).

Ein nachfolgender Austausch des Tastkopfes 18 durch ein auf die Rissform masslich abgestimmtes Fräswerkzeug 20 (Fig. 4) und dessen Führung entlang des Rissverlaufes ermöglicht dessen räumlich frei gestaltbares Ausfräsen ohne Änderung der designkonformen Tannenbaumnut 13 insgesamt. Dabei wird über die abzuarbeitende Risszone im Nutgrund der Tannenbaumnuten 13 ein zum Abtragsprozess der rissbehafteten Nutgrundoberflache rotierender Fräskörper als Werkzeug geführt. Das Fräswerkzeug 20 wird dazu entlang der zuvor programmierten Tannenbaumnutbahnkontur so geführt, dass diese vom Abspanprozess nicht betroffen ist.

Das Fräswerkzeug 20 wird durch eine geeignete Antriebseinheit, die ausserhalb der Nut befestigt ist, in der Nut in mehreren Ebenen programmiert steuerbar bewegt. Durch eine variable Bestückung des Werkzeuges mit unterschiedlichen Schneidkörpern oder unterschiedlichen Werkzeugformen können Bearbeitungszonenobertlächenrauhigkeit und das Oberflächenabtragsprofil variiert werden. Die Antriebseinheit kann ein von aussen (oberhalb der Nut) angesetzter drehzahl-steuerbarer Motor sein.

Für das Abtasten der Nutkontur und das Ausfräsen der Risse ist eine frei positionierbare Vorrichtung zur fünfachsigen Bewegung bzw. Positionierung besonders geeignet, wie sie in der Druckschrift WO-A1-03/037562 offenbart und eingehend beschrieben ist.

In der Praxis wird ein wegen Anrissen in der Oberflache der Tannenbaumnut zu reparierender Rotor einer Niederdruck-Dampfturbine waagerecht liegend arretiert (siehe Fig. 1). Ein Fräswerkzeug (20 in Fig. 1) wird entlang dem rissbehafteten Nutgrund der Tannenbaumnut 13 geführt und motorisch angetrieben, wobei ein Abtragsprozess an den Kontaktflächen zwischen Arbeitswerkzeug und Nutgrund als zu bearbeitender Fläche entsteht. Die definiert in Kontur und Tiefe abgetragene Nutflankenoberfläche ist das Ziel des Abtragsprozesses, wobei die abzutragende Oberflächentiefe durch die zuvor oder während des Abtragprozesses ermittelte Risstiefe vorgegeben ist.

Das Fräswerkzeug 20 bearbeitet dabei eine durch den Bewegungsraum des Fräswerkzeugpositioniergerätes 17 entlang der Nut begrenzte Nutoberfläche. Um alle mit Rissen behafteten Nuten mittels Abtrag durch Zerspanung von solchen zu befreien, erfolgt eine schrittweise Umpositionierung der Zustellung von Rotor 10 und Fräswerkzeug 20 vorteilhaft mittels durch eine die Läuferwelle antreibende Planscheibe mit Teilung.

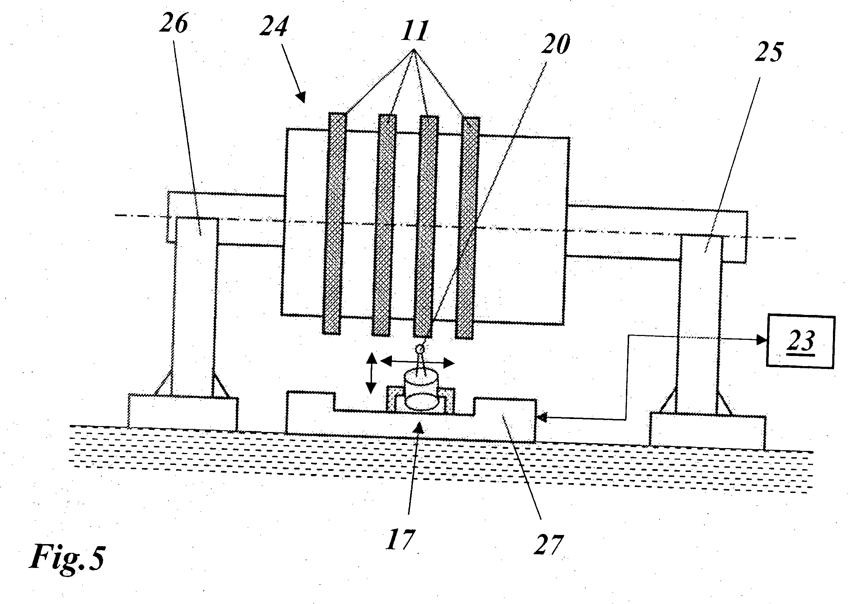

Besonders einfach und mit erheblich reduziertem Aufwand sowie ggf. direkt am Einsatzort des Rotors lässt sich das erfindungsgemässe Verfahren durchführen, wenn eine Konfiguration gemäss Fig. 5 eingesetzt wird. Der Rotor 24 ist in diesem Falle oberhalb des Bodens auf zwei Lagerböcken 25 und 26 liegend aufgebockt, sodass die zu bearbeitenden Rotorscheiben 11 mit ihren Schaufelnuten vollumfänglich von unten oder von der Seite zugänglich sind. Im Beispiel der Fig. 5 ist eine Fräsvorrichtung 27 direkt unterhalb oder seitlich des drehbar gelagerten Rotors 24 platziert. In der Fräsvorrichtung 27 ist wiederum das Fräswerkzeug 20 mit Hilfe eines entsprechenden Fräswerkzeugpositioniergerätes 17, gesteuert durch die Steuerung 23, in der Lage, die Nuten am Rotor in der bereits beschriebenen Weise zu bearbeiten. Die Fräsvorrichtung 27 ist in Fig. 5 nur schematisch dargestellt und kann in der Praxis auf unterschiedliche Art und Weise aufgebaut sein.

### Das vorgeschlagene Verfahren hat insgesamt folgende Charakteristika:

- Zur Reparatur rissbehafteter Tannenbaumnuten an Niederdruck-Dampfturbinenläufern werden die rissbehafteten Tannenbaumnuten mittels einer räumlich frei beweglichen Fräsanlage im Bereich der Risse nachgefräst, wobei die Risse als solche entfernt werden.
- Die Nutkontur wird im Übergang der Nutflanken in Breite und Radien variabel ausgebildet; sie ist jeweils vorgegeben durch die Form des Fräswerkzeuges.
- Es können aber auch mit Vorteil in Läufer vormals während des originären Fertigungsprozesses eingebrachte rissanfällige Nutformen nachträglich durch Fräsbearbeitung in rissresistente Nutformen umgestaltet werden.
- Vorzugsweise wird die motorisch angetriebene Werkzeugführung unterhalb oder neben der zu bearbeitenden Turbinenwelle positioniert, was herkömmliche den Bediener oder die Maschine zu positionierende Bühnen oder Gerüste erübrigt. Voraussetzung dafür ist, dass die Läufermasse hinreichend gross ist, um die Bearbeitungskräfte aus dem Fräsvorgang ohne zusätzliche aufwändige Bauteilarretierung aufzunehmen.

### BEZUGSZEICHENLISTE

- 10,24: Rotor (Niederdruckturbine)
- 11: Rotorscheibe
- 12: Achse
- 13: Tannenbaumnut
- 14: Zahn
- 15: Zacke
- 16: Zackengrund
- 17: Fräswerkzeugpositioniergerät
- 18: Tastkopf
- 19: Schaufel
- 20: Fräswerkzeug
- 21: Riss
- 22: Ausarbeitungsbereich
- 23: Steuerung
- 25,26: Lagerbock
- 27: Fräsvorrichtung

## Patentansprüche

1. Verfahren zum nachträglichen Bearbeiten von zur Aufnahme von Schaufeln (19) vorgesehenen Nuten, insbesondere Tannenbaumnuten (13), an einem Rotor (10, 24) einer Turbine, insbesondere einer Niederdruckdampfturbine, bei welchem in den Nuten bzw. Tannenbaumnuten (13) mittels einer programmgesteuerten Fräsvorrichtung (17, 20; 27) Material abgetragen wird, wobei die Fräsvorrichtung (17, 20; 27) mit einem Fräswerkzeug (20) in die Nut bzw. Tannenbaumnut (13) eintaucht, welches von einem im Raum frei beweglichen Fräswerkzeugpositioniergerät (17) an den zu bearbeitenden Stellen in der Nut bzw. Tannenbaumnut (13) entlang geführt wird, **dadurch gekennzeichnet, dass** zunächst die Nuten bzw. Tannenbaumnuten (13) auf das Vorhandensein von Rissen (21) untersucht werden, dass die mit Rissen (21) behafteten Nuten bzw. Tannenbaumnuten (13) mit einem Tastkopf (18) abgefahren werden, dass jeweils ein auf die Rissform abgestimmtes Fräswerkzeug (20) ausgewählt wird, dass die Tiefe des zur Entfernung des Risses auszuarbeitenden Gebietes bestimmt wird, und dass das den Riss enthaltende Gebiet nach Massgabe der abgetasteten Nutkontur bis zur vorbestimmten Tiefe mit dem ausgewählten Fräswerkzeuge (20) abgetragen wird.

2. Verfahren nach Anspruch 1, **dadurch gekennzeichnet, dass** zum Abfahren der mit Rissen (21) behafteten Nuten bzw. Tannenbaumnuten (13) der Tastkopf (18) mittels des Fräswerkzeugpositioniergeräts (17) verfahren wird.

3. Verfahren nach Anspruch 1 oder 2, **dadurch gekennzeichnet, dass** das Fräswerkzeug (20) entlang einer zuvor programmierten Nutbahnkontur durchgeführt wird, ohne die Form der Nut bzw. Tannenbaumnut insgesamt zu ändern.

4. Verfahren nach einem der Ansprüche 1 bis 3, **dadurch gekennzeichnet, dass** das Fräswerkzeug (20) durch eine ausserhalb der Nut bzw. Tannenbaumnut (13) angeordnete Antriebseinheit (17) angetrieben und/oder bewegt wird.

5. Verfahren nach einem der Ansprüche 1 bis 4, **dadurch gekennzeichnet, dass** zur Ausarbeitung des den Riss enthaltenden Gebietes nacheinander mehrere Fräswerkzeuge mit unterschiedlichen Schneidkörpern und/oder Werkzeugformen verwendet werden.

6. Verfahren nach Anspruch 4, **dadurch gekennzeichnet, dass** das Fräswerkzeug (20) in der Nut bzw. Tannenbaumnut (13) in mehreren Ebenen programmiert steuerbar bewegt wird.

7. Verfahren nach einem der Ansprüche 1 bis 6, **dadurch gekennzeichnet, dass** der Rotor (10, 24) auf Lagermitteln (25, 26) aufliegend gelagert wird, und dass die Fräsvorrichtung (17, 20; 27) mit einem Fräswerkzeug (20) die Nut bzw. Tannenbaumnut (13) von unten oder von der Seite bearbeitet, wobei die Bearbeitungskräfte aus dem Fräsvorgang ohne zusätzliche Bauteilarretierung von der Masse des Rotors (10, 24) aufgenommen werden.

## Claims

1. Method for subsequently machining grooves, especially fir-tree grooves (13), which are provided for accommodating blades (19), on a rotor (10, 24) of a turbine, especially a low-pressure steam turbine, in which method in the grooves, or fir-tree grooves (13), material is removed by means of a program-controlled milling device (17, 20; 27), wherein the milling device (17, 20; 27) is inserted into the groove, or fir-tree groove (13), with a milling tool (20) which by a milling tool positioning device (17), which is freely movable in space, is guided along the places in the groove, or fir-tree groove (13), which are to be machined, **characterized in that** the grooves, or fir-tree grooves (13), are first inspected for the presence of cracks (21), **in that** the grooves, or fir-tree grooves (13), which are flawed with cracks (21) are run over with a probe (18), **in that** a milling tool (20) which is matched to the crack shape is selected in each case, **in that** the depth of the region which is to be cut out for removal of the crack is determined, and **in that** the region which includes the crack is milled down to the predetermined depth with the selected milling tool (20) in accordance with the scanned groove contour.

2. Method according to Claim 1, **characterized in that** for running over the grooves, or fir-tree grooves (13), which are flawed with cracks (21), the probe (18) is moved by means of the milling tool positioning device (17).

3. Method according to Claim 1 or 2, **characterized in that** the milling tool (20) is guided along a previously programmed groove track contour without the shape of the groove, or fir-tree groove, being altered overall.

4. Method according to one of Claims 1 to 3, **characterized in that** the milling tool (20) is driven and/or moved by means of a drive unit (17) which is arranged outside the groove, or fir-tree groove (13).

5. Method according to one of Claims 1 to 4, **characterized in that** for cutting out the region which includes the crack a plurality of milling tools with different cutting bodies and/or tool shapes are used one after the other.

6. Method according to Claim 4, **characterized in that** the milling tool (20) is moved in the groove, or fir-tree groove (13), in a plurality of planes in a programmed controllable manner.

7. Method according to one of Claims 1 to 6, **characterized in that** the rotor (10, 24) is mounted horizontally on bearing means (25, 26), and **in that** the milling device (17, 20; 27) with a milling tool (20) machines the groove, or fir-tree groove (13), from the bottom or from the side, wherein the machining forces from the milling process are absorbed by the mass of the rotor (10, 24) without additional component securing.

## Revendications

1. Procédé de post-usinage de rainures prévues pour recevoir des aubes (19), en particulier de rainures en sapin (13), sur un rotor (10, 24) d'une turbine, en particulier d'une turbine à vapeur basse pression, dans lequel de la matière est enlevée dans les rainures ou les rainures en sapin (13) au moyen d'un dispositif de fraisage (17, 20 ; 27) à commande programmable, le dispositif de fraisage (17, 20 ; 27) plongeant avec un outil de fraisage (20) dans la rainure ou la rainure en sapin (13), lequel outil de fraisage est guidé le long des zones à usiner dans la rainure ou la rainure en sapin (13) par un appareil de positionnement d'outil de fraisage (17) librement mobile dans l'espace, **caractérisé en ce que** tout d'abord les rainures ou les rainures en sapin (13) sont examinées pour déceler la présence de fissures (21), **en ce que** les rainures ou les rainures en sapin (13) qui présentent des fissures (21) sont parcourues par une tête de palpage (18), **en ce qu'**un outil de fraisage (20) est à chaque fois sélectionné de manière adaptée à la forme des fissures, **en ce que** la profondeur de la région à creuser par usinage pour enlever la fissure est déterminée et **en ce que** la région contenant la fissure est enlevée en fonction du contour de rainure balayé jusqu'à la profondeur prédéterminée avec l'outil de fraisage sélectionné (20).

2. Procédé selon la revendication 1, **caractérisé en ce que** pour parcourir les rainures ou les rainures en sapin (13) présentant des fissures (21), la tête de palpage (18) est déplacée au moyen de l'appareil de positionnement d'outil de fraisage (17).

3. Procédé selon la revendication 1 ou 2, **caractérisé en ce que** l'outil de fraisage (20) est guidé le long d'un contour de trajectoire de rainure préalablement programmé sans modifier dans l'ensemble la forme de la rainure ou de la rainure en sapin.

4. Procédé selon l'une quelconque des revendications 1 à 3, **caractérisé en ce que** l'outil de fraisage (20) est entraîné et/ou déplacé par une unité d'entraînement (17) disposée à l'extérieur de la rainure ou de la rainure en sapin (13).

5. Procédé selon l'une quelconque des revendications 1 à 4, **caractérisé en ce que** pour l'enlèvement par usinage de la région contenant la fissure, plusieurs outils de fraisage sont utilisés les uns après les autres avec des corps de coupe différents et/ou des formes d'outil différentes.

6. Procédé selon la revendication 4, **caractérisé en ce que** l'outil de fraisage (20) est déplacé dans plusieurs plans de manière commandable par programme dans la rainure ou la rainure en sapin (13).

7. Procédé selon l'une quelconque des revendications 1 à 6, **caractérisé en ce que** le rotor (10, 24) est supporté sur des moyens de palier (25, 26) et **en ce que** le dispositif de fraisage (17, 20 ; 27) usine avec un outil de fraisage (20) la rainure ou la rainure en sapin (13) par le dessous ou depuis le côté, les forces d'usinage provenant de l'opération de fraisage étant reçues sans arrêt supplémentaire du composant par la masse du rotor (10, 24).
